Europäisches Patentamt

(19) European Patent Office

Office européen des brevets

(11) Publication number: **0 308 168 B1**

## EUROPEAN PATENT SPECIFICATION

(12)

(45) Date of publication of patent specification: **19.11.92** (51) Int. Cl.⁵: **B60T 11/16**

(21) Application number: **88308430.3**

(22) Date of filing: **13.09.88**

(54) **Hydraulic master cylinder.**

(30) Priority: **16.09.87 GB 8721799**

(43) Date of publication of application:
**22.03.89 Bulletin 89/12**

(45) Publication of the grant of the patent:
**19.11.92 Bulletin 92/47**

(84) Designated Contracting States:
**DE GB IT**

(56) References cited:
DE-A- 3 149 718          DE-A- 3 338 248
DE-A- 3 511 639          DE-B- 1 576 056
GB-A- 1 592 306          GB-A- 2 000 235
GB-A- 2 061 433          GB-A- 2 090 358
US-A- 3 875 748

(73) Proprietor: **LUCAS INDUSTRIES public limited
company
Great King Street
Birmingham, B19 2XF West Midlands(GB)**

(72) Inventor: **Price, Anthony George
14, Meadow Lane Croesyceiliog
Cwmbran Gwent, NP44 2EY Wales(GB)**

(74) Representative: **Waite, Anthony William et al
MARKS & CLERK Alpha Tower Suffolk Street
Oueensway
Birmingham B1 1TT(GB)**

## Description

This invention relates to an hydraulic master cylinder, primarily for a vehicle hydraulic braking system, and of the general kind containing a high pressure chamber from which high pressure is supplied, in use, to an associated brake actuator to produce a brake clamping force, and a so-called "quick-fill" chamber which acts to supply a relatively large volume of fluid at low pressure to the actuator in order to effect an initial rapid take-up of brake clearances.

In some conventional master cylinders of the aforesaid general kind, a pressure-responsive valve is disposed between the quick-fill chamber and the reservoir and, once closed by initiation of fluid flow from the chamber, subsequently opens to place this chamber in communication with the reservoir when the pressure in the chamber reaches a predetermined value, normally at the end of the quick-fill phase. Although this arrangement is satisfactory for most conditions of operation, it is possible for premature opening of the valve to occur in the event that the actuating pedal is moved unusually rapidly as, for example, in an emergency brake application. This can result in dumping of the quick-fill pressure before the braking clearances have been taken up and thereby lead to excessive disconcerting pedal travel as the remaining clearances are taken up by relatively low fluid flow from the high pressure chamber. Conversely, it is possible that an unusually slow pedal movement may generate insufficient pressure in the quick-fill chamber to cause initial closing of the valve, so that no quick-fill pressure is generated and excessive pedal travel again results.

GB-A-2000235 illustrates a master cylinder provided with quick-fill and pressure pistons and in which a mechanically actuated valve device operates, as a result of working movement of the quick-fill piston, to control fluid flow between a reservoir and the quick-fill chamber. A further valve arrangement is provided to divert fluid flow from the quick-fill chamber when a predetermined pressure is established in the pressure chamber, resulting in undesirable complexity.

An object of the present invention is to provide an improved hydraulic master cylinder of the aforesaid general kind in which the aforesaid potential difficulties are alleviated or avoided in a simple and convenient manner.

According to the present invention, a master cylinder of the aforesaid general kind contains a high pressure chamber and a quick-fill chamber arranged in succession and containing respective pistons actuated by force input means, a mechanically actuated valve device being arranged between the quick-fill chamber and a reservoir and operable, as a result of working movement of the quick-fill piston to close off communication between the reservoir and quick-fill chamber to permit establishment of pressure in the latter, and is characterised by yieldable means acting to transmit actuating force from the force input means to the quick-fill piston during take-up of brake clearances, but yielding in response to a predetermined load applied to the high pressure piston in order to prevent further working movement of the quick-fill piston during high pressure operation of the master cylinder.

Preferably, the valve device, conveniently in the form of a tipping valve, is held in its open position by the quick-fill piston when the latter is in its non-actuated position, and spring-urged into its closed position during the working travel of the quick-fill piston.

Typically, the quick-fill piston is supported from the pressure piston, being preferably mounted on an axial extension of the latter and urged against an abutment fast with the extension by said yieldable means acting between the quick-fill piston and part of the force input means, said force input means and pressure piston moving relative to the quick-fill piston upon yielding of said yieldable means.

The invention will now be described, by way of example, with reference to the accompanying drawings in which:-

Figure 1 is a longitudinal cross-section of one form of the master cylinder of the invention forming part of a dual master cylinder assembly, and

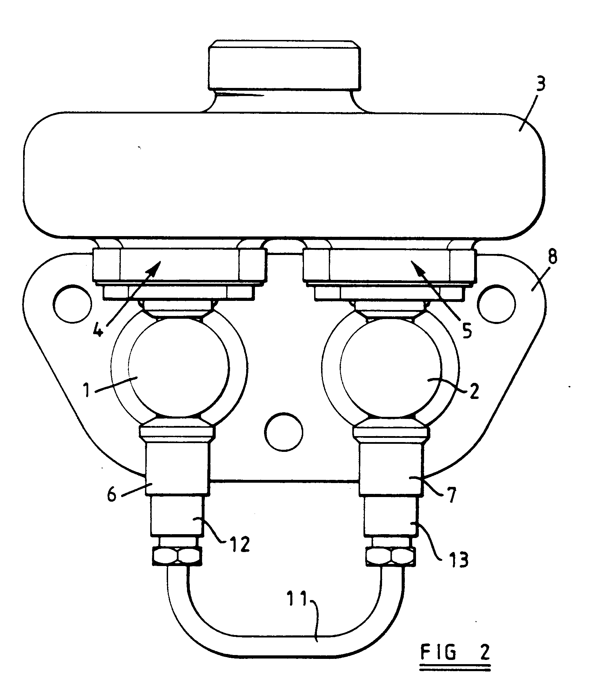

Figure 2 is an end view of the assembly of Figure 1.

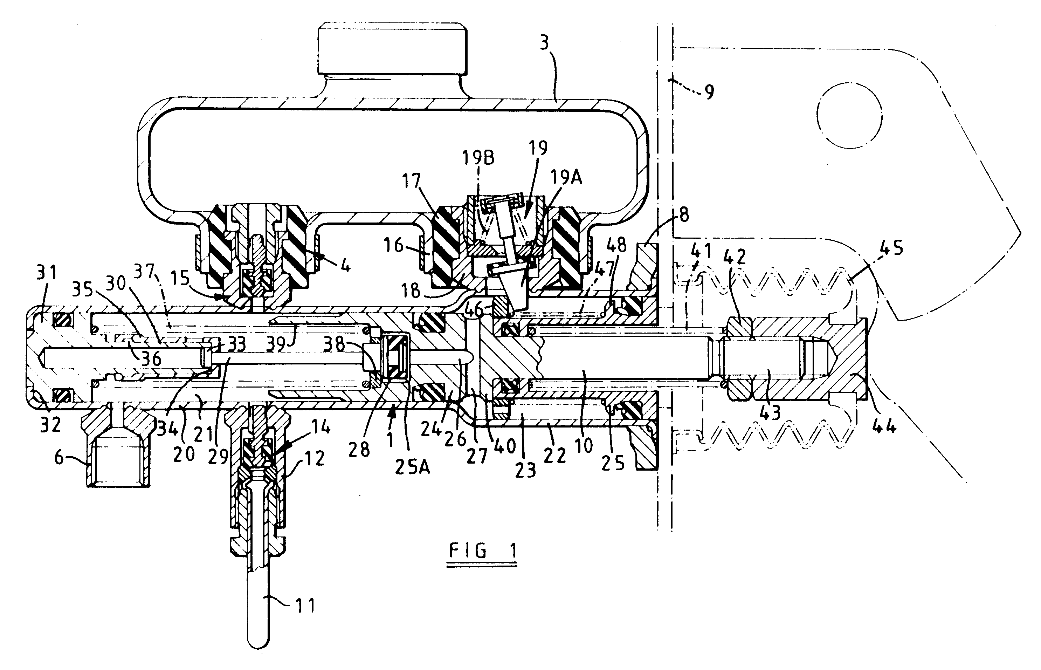

Referring to the drawings, these illustrate a master cylinder assembly which includes a pair of master cylinders 1, 2 fed from a common reservoir 3 having respective connections 4 and 5 with the cylinders. Pressure fluid outlets 6, 7 are provided towards the forward ends of the cylinders. The cylinders are provided with a common mounting flange 8 enabling the assembly to be mounted on a convenient support such as a vehicle bulk head 9 for example. Respective force input rods are provided for the two cylinders, one of which can be seen at 10 in Figure 1. The rods would normally be connected to driver operated pedals which may be latched together for simultaneous operation of the cylinders in order to effect straight-line retardation, but which may be unlatched for independent operation so that one or other cylinder may be actuated individually in order to effect a spin turn of the vehicle. The cylinders 1 and 2 are interconnected by a transfer passage formed by a pipe 11 secured to respective bosses 12, 13 welded to the outer surfaces of the cylinders, each boss containing a transfer valve assembly 14, which is not described in detail since it will be readily understood by a person familiar with the art and forms no part of the present invention. Similarly, the port connector 5 contains a bleed mechanism 15, further details of which are not required for an understanding of the invention. A neck 16 of each reservoir is mounted by way of a grommet 17 on a boss 18 welded to the cylinder, the boss containing a tipping valve mechanism 19 of conventional construction and to which further reference will be made hereafter.

The cylinders 1 and 2 are identical in construction and operation and one of them will now be described in more detail in relation to Figure 1. The cylinder is formed by a thin-walled drawn steel tube which is stepped to form a smaller diameter pressure cylinder 20 defining a pressure chamber 21 and a larger diameter quick-fill cylinder 22 defining a chamber 23, the two chambers having respective pistons 24, 25 slidable therein.

The piston 24 is formed with a recess 25A which communicates via an axial passage 26 of the piston with a radial passage 27 opening into the quick-fill chamber 23. The recess 25A houses a centre valve element 28, of which a rod 29 extends axially towards the forward end of the cylinder and is supported within a tubular extension 30 of an end member 31 which is lodged against an inwardly turned flange 32 of the tube 1. A head 33 of the rod 29 abuts against a shoulder 34 on a retainer formed by a sleeve 35, conveniently of plastics material, which is closely engaged over the tubular extension 30 and held in position thereon by snap engagement over an outwardly projecting rib 36 upon the extension 30. The end member 31 is held in place by a spring 37 acting between that member and a retaining ring 38 for the valve member 28, carried by the piston 24, the spring 37 urging the piston 24 towards its inoperative position, as shown.

A forward end portion of the piston 24 is hollow and provides a recess 39 of sufficient size to enable the piston to move telescopically over the tubular extension 35 during the piston working travel. This arrangement enables the length of the pressure cylinder to be minimised and contributes to the compact proportions of the master cylinder. The effective telescoping of the centre valve element within the piston 24 further contributes to the compact axial dimension of the master cylinder.

The force input member 10 is in the form of a piston rod forming an axial integral extension of the piston 24. The quick-fill piston 25 is a separate element being mounted on and surrounding the member 10 and being urged against a radial flange 40 of the member 10 by a spring 41 housed largely within a hollow portion of the piston 25 and acting between an inner end of the piston and an abutment formed by a nut 42 screwed on to a threaded end portion 43 of the member 10. This threaded portion also carries an end member 44 threaded thereon and acting as a retainer for a boot 45. The piston 25 carries a surrounding abutment 46 urged against the flange 40 by a spring 47 acting between the abutment member and a further flange 48 of the piston. The abutment member is arranged to co-act with the valve member 19A of the tipping valve 19, in the manner to be described.

Actuating force is applied to the piston 25 via the nut 42 of the member 10 acting on the spring 41 and the strength of this spring is chosen so that yielding of the spring will not occur during the initial application of actuating force. Thus, when the member 10 is depressed, both the pistons 24 and 25 move to the left. As illustrated, the tipping valve 19 is held open by engagement therewith of the abutment 46, when the piston 25 is in its retracted position, as shown. The aforesaid movement of the piston 25 and abutment 46 to the left permits the tipping valve to close in conventional manner, under the action of its spring 19B, thereby enabling the low quick-fill pressure to be established in the chamber 23 for transmission via the chamber 21 and outlet 6 to the braking circuit, in known manner. This causes a relatively large volume of fluid to be passed rapidly to the braking system in order to take up initial braking tolerances. After this initial stage, increasing pressure in the chamber 21 overcomes the pressure established in chamber 23 and the valve 28 is thereby induced to close. Pressure now builds rapidly in chamber 21 to cause the brake actuator to apply brake clamping force and as the required actuating force applied to the member 10 increases, the spring 41 yields, enabling the piston 24 to continue its actuating movement without further movement of the piston 25. Thus, although the tipping valve member 19A is closed, precluding flow of fluid from the chamber 23 to the reservoir 3, there is no resultant excess pressure in the chamber 23 because of the now inoperative condition of the piston 25.

Because the valve 19 is positively closed by mechanical means, rather than relying on the pressure prevailing in the quick-fill chamber 23, the potential problems in some conventional arrangements arising from unusually rapid or slow actuation of the quick-fill piston are overcome. The yieldable means in the form of spring 41 enables the mechanical valve device to be employed without danger of over-pressurising the quick-fill chamber.

The fact that the valve 19 is held open when the quick-fill piston 25 is in its retracted position provides a convenient means for enabling bleeding of entrapped air from the quick-fill cylinder to be effected automatically during said inoperative condition. The invention will be seen to provide a very simple and convenient pressure cylinder incorporating a quick-fill facility in which the aforesaid problems are overcome in a simple and efficacious manner.

Although the invention is described as applied to the cylinders of a dual master cylinder assembly, it will be understood that it may readily be applied to a single cylinder, when required.

The valves 19 and 28 may take any convenient alternative forms to those described.

**Claims**

1. An hydraulic master cylinder containing a pressure chamber (21) and a quick-fill chamber (23) arranged in succession and containing respective pistons (24, 25) actuated by force input means (10), and a mechanically actuated valve device (19) arranged between the quick-fill chamber (23) and a reservoir (3) and operable, as a result of working movement of the quick-fill piston (25) to close off communication between the reservoir and quick-fill chamber (23) to permit establishment of pressure in the latter, characterised by yieldable means (41) acting to transmit actuating force from the force input means (10) to the quick-fill piston (25) during take-up of brake clearances, but to yield in response to a predetermined load applied to the high pressure piston (24) in order to prevent further working movement of the quick-fill piston during high pressure operation of the master cylinder.

2. A master cylinder according to Claim 1, characterised in that the valve device (19) is held in its open position by the quick-fill piston (25) when the latter is in its non-actuated position and spring-urged into its closed position during the working travel of the quick-fill piston.

3. A master cylinder according to Claim 2, characterised in that the valve device (19) is a tipping valve.

4. A master cylinder according to any one of Claims 1 to 3, characterised in that the quick-fill piston (25) is supported from the pressure piston (24).

5. A master cylinder according to Claim 4, characterised in that the quick-fill piston (25) is mounted on an axial extension (10) of the pressure piston (24).

6. A master cylinder according to Claim 5, characterised in that said pressure piston extension (10) constitutes the force input means.

7. A master cylinder according to Claim 6, characterised in that the quick-fill piston (25) is urged against an abutment (40) fast with the extension (10) by said yieldable means (41) acting between the quick-fill piston and part (42) of said force input means (10), said means (10) and pressure piston (24) moving relative to the quick-fill piston (25) upon yielding of the yieldable means (41).

8. A master cylinder according to any one of the preceding claims, characterised in that the pressure chamber (21) and quick-fill chamber (23) are co-axial.

9. A master cylinder according to any one of the preceding claims, characterised in that the pressure piston (24) provides a communication path (26) between the pressure and quick-fill chambers (21, 23), valve means (28) acting to close said path in response to actuation of the pressure piston.

10. A master cylinder according to Claim 9, characterised in that the valve means (28) is housed in a recess (25A) of the pressure piston (24), the communication path (26) leading from and forming a port within the recess for co-action with said valve means to close said path.

11. A master cylinder according to Claim 10, characterised in that said valve means is a centre valve of which a portion (29) co-axial with the piston (24) is slidably supported on an inwardly axially extending fixed part (30).

12. A master cylinder according to Claim 11, characterised in that said fixed part (30) is part of an end closure member (31) which closes the open end of a cylinder (1) containing the pressure chambers, said fixed part being hollow and receiving said valve portion (29) in telescopic relationship during sliding movement of the latter.

13. A master cylinder according to Claim 11 or Claim 12, characterised in that the piston (24) has a hollow forward end portion providing a recess (39) which receives the fixed part (30) therein during forward movement of the piston.

14. An hydraulic master cylinder assembly including a pair of master cylinders according to any one of the preceding claims, characterised in that the pressure cylinders are interconnected by a transfer passage (11), fluid flow through which is controlled by associated valve means (14).

**Patentansprüche**

1. Hydraulischer Hauptzylinder mit einer Druckkammer (21) und einer Schnellfüllkammer (23), die hintereinander angeordnet sind und entsprechende Kolben (24, 25) enthalten, die durch Krafteinleitungseinrichtungen (10) betätigt werden, und einer mechanisch betätigten Ventilvorrichtung (19), die zwischen der Schnellfüllkammer (23) und einem Speicher (3) angeordnet und aufgrund der Arbeitsbewegung des Schnellfüllkolbens (25) zum Absperren der Verbindung zwischen dem Speicher und der Schnellfüllkammer (23) betätigbar ist, um einen Druckaufbau in der Schnellfüllkammer zu ermöglichen, **gekennzeichnet durch** nachgiebige Einrichtungen (41), die die Betätigungskraft von den Krafteinleitungseinrichtungen (10) auf den Schnellfüllkolben (25) während des Aufbrauchs des Bremsspieles übertragen, jedoch in Abhängigkeit von einer auf den Hochdruckkolben (24) vorgegebenen Last nachgeben, um eine weitere Arbeitsbewegung des Schnellfüllkolbens während des Hochdruckbetriebes des Hauptzylinders zu verhindern.

2. Hauptzylinder nach Anspruch 1, **dadurch gekennzeichnet, daß** die Ventilvorrichtung (19) durch den Schnellfüllkolben (25) in ihrer offenen Stellung gehalten wird, wenn sich der Kolben in seiner nicht betätigten Stellung befindet, und wärhend des Arbeitshubes des Schnellfüllkolbens durch eine Feder in ihre geschlossene Position gedrückt wird.

3. Hauptzylinder nach Anspruch 2, **dadurch gekennzeichnet, daß** die Ventilvorrichtung (19) ein Kippventil ist.

4. Hauptzylinder nach einem der Ansprüche 1 bis 3, **dadurch gekennzeichnet, daß** der Schnellfüllkolben (25) vom Druckkolben (24) gelagert wird.

5. Hauptzylinder nach Anspruch 4, **dadurch gekennzeichnet, daß** der Schnellfüllkolben (25) an einer axialen Verlängerung (10) des Druckkolbens (24) montiert ist.

6. Hauptzylinder nach Ansprcuh 5, **dadurch gekennzeichnet, daß** die Verlängerung (10) des Druckkolbens die Krafteinleitungseinrichtungen bildet.

7. Hauptzylinder nach Anspruch 6, **dadurch gekennzeichnet, daß** der Schnellfüllkolben (25) durch die nachgiebige Einrichtung (41), die zwischen dem Schnellfüllkolben und einem Teil (42) der Krafteinleitungseinrichtungen (10) wirkt, gegen einen fest an der Verlängerung (10) angebrachten Anschlag (40) gedrückt wird und daß sich die Einrichtungen (10) und der Druckkolben (24) bei einem Nachgeben der nachgiebigen Einrichtung (41) relativ zum Schnellfüllkolben (25) bewegen.

8. Hauptzylinder nach einem der vorangehenden Ansprüche, **dadurch gekennzeichnet, daß** die Druckkammer (21) und die Schnellfüllkammer (23) koaxial angeordnet sind.

9. Hauptzylinder nach einem der vorangehenden Ansprüche, **dadurch gekennzeichnet, daß** der Druckkolben (24) einen Verbindungsweg (26) zwischen der Druck- und Schnellfüllkammer (21, 23) vorsieht und daß die Ventileinrichtung (28) den Verbindungsweg in Abhängigkeit von einer Betätigung des Druckkolbens schließt.

10. Hauptzylinder nach Anspruch 9, **dadurch gekennzeichnet, daß** die Ventileinrichtung (28) in einer Ausnehmung (25A) des Druckkolbens (24) angeordnet ist und daß der Verbindungsweg (26) von einer Öffnung innerhalb der Ausnehmung wegführt und eine solche bildet, um mit der Ventileinrichtung zum Schließen des Weges zusammenzuwirken.

11. Hauptzylinder nach Anspruch 10, **dadurch gekennzeichnet, daß** die Ventileinrichtung ein Zentralventil ist, von dem ein koaxial zum Kolben 24 verlaufender Abschnitt (29) gleitend an einem axial einwärts verlaufenden festen Teil (30) gelagert ist.

12. Hauptzylinder nach Anspruch 11, **dadurch gekennzeichnet, daß** der feste Teil (30) Teil eines Endschließelementes (31) ist, das das offene Ende eines Zylinders (1), der die Druckkammern enthält, schließt und hohl ist sowie den Ventilabschnitt (29) in teleskopartiger Beziehung während einer Gleitbewegung desselben aufnimmt.

13. Hauptzylinder nach Anspruch 11 oder 12, **dadurch gekennzeichnet, daß** der Kolben (24) einen hohlen vorderen Endabschnitt aufweist, der eine Ausnehmung (39) vorsieht, die während der Vorwärtsbewegung des Kolbens den festen Teil (30) darin aufnimmt.

14. Hydraulische Hauptzylindereinheit mit einem Paar von Hauptzylindern nach einem der vorangehenden Ansprüche, **dadurch gekennzeichnet, daß** die Druckzylinder durch einen Überführungskanal (11) miteinander verbunden sind, dessen Strömungsmitteldurchfluß durch zugehörige Ventileinrichtungen (14) gesteuert wird.

## Revendications

1. Maître-cylindre hydraulique contenant une chambre de pression (21) et une chambre (23) à remplissage rapide disposées en série et contenant des pistons respectifs (24, 25) entraînés par un moyen d'entrée de force (10), ainsi qu'un dispositif de soupape (19) à entraînement mécanique qui est disposé entre la chambre (23) à remplissage rapide et un réservoir (3), et qui est apte à être mis en service suite au mouvement de travail du piston (25) de remplissage rapide pour couper la communication entre le réservoir et la chambre (23) à remplissage rapide afin de permettre l'installation d'une pression dans cette dernière, caractérisé par un moyen (41) apte à subir une déformation agissant pour transmettre la force d'entraînement provenant du moyen d'entrée de force (10) au piston (25) de remplissage rapide lors du rattrapage du jeu des freins, mais pour subir une déformation en réponse à une sollicitation prédéterminée s'exerçant sur le piston (24) de pression élevée afin d'empêcher la poursuite du mouvement de travail du piston de remplissage rapide lors de la mise en service du maître-cylindre sous haute pression.

2. Maître-cylindre selon la revendication 1, caractérisé en ce que le dispositif de soupape (19) est maintenu dans sa position ouverte par le piston (25) de remplissage rapide lorsque ce dernier se trouve dans sa position non entraînée et il est maintenu pressé par un ressort dans sa position fermée lors de la course de travail du piston de remplissage rapide.

3. Maître-cylindre selon la revendication 2, caractérisé en ce que le dispositif de soupape (19) est une soupape basculante.

4. Maître-cylindre selon l'une quelconque des revendications 1 à 3, caractérisé en ce que le piston (25) de remplissage rapide est soutenu à partir du piston de pression (24).

5. Maître-cylindre selon la revendication 4, caractérisé en ce que le piston (25) de remplissage rapide est monté sur un prolongement axial (10) du piston de pression (24).

6. Maître-cylindre selon la revendication 5, caractérisé en ce que ledit prolongement de piston de pression (10) constitue le moyen d'entrée de force.

7. Maître-cylindre selon la revendication 6, caractérisé en ce que le piston (25) de remplissage rapide est pressé contre une butée (40) solidaire du prolongement (10) à l'intervention dudit moyen (41) apte à subir une déformation agissant entre le piston de remplissage rapide et une partie (42) dudit moyen d'entrée de force (10), ledit moyen (10) et le piston de pression (24) se déplaçant par rapport au piston (25) de remplissage rapide suite à la déformation du moyen (41) apte à subir une déformation.

8. Maître-cylindre selon l'une quelconque des revendications précédentes, caractérisé en ce que la chambre de pression (21) et la chambre (23) à remplissage rapide sont coaxiales.

9. Maître-cylindre selon l'une quelconque des revendications précédentes, caractérisé en ce que le piston de pression (24) procure une voie de communication (26) entre les chambres de pression et à remplissage rapide (21, 23), le moyen de soupape (28) agissant pour fermer ladite voie en réponse à l'entraînement du piston de pression.

10. Maître-cylindre selon la revendication 9, caractérisé en ce que le moyen de soupape (28) est logé dans un évidement (25A) du piston de pression (24), la voie de communication (26) formant un orifice d'où elle s'étend au sein de l'évidement pour agir conjointement avec ledit moyen de soupape pour fermer ladite voie.

11. Maître-cylindre selon la revendication 10, caractérisé en ce que ledit moyen de soupape est une soupape centrale dont une portion (29) en position coaxiale au piston (24) est supportée en coulissement sur une partie fixe (30) s'étendant axialement vers l'intérieur.

12. Maître-cylindre selon la revendication 11, caractérisé en ce que ladite partie fixe (30) fait partie d'un élément terminal de fermeture (31) qui ferme l'extrémité ouverte d'un cylindre (1) contenant les chambres de pression, ladite partie fixe étant creuse et ladite portion de soupape (29) venant se loger au sein de cette dernière en relation téléscopique lors de son mouvement de coulissement.

13. Maître-cylindre selon la revendication 11 ou 12, caractérisé en ce que le piston (24) possède une portion terminale antérieure creuse procurant un évidement (39) dans lequel vient se loger la partie fixe (30) au cours du mouvement du piston vers l'avant.

14. Assemblage de maître-cylindre hydraulique englobant une paire de maîtres-cylindres selon l'une quelconque des revendications précédentes, caractérisé en ce que les cylindres de pression sont reliés mutuellement par un passage de transfert (11), l'écoulement de fluide traversant ce dernier étant commandé par un moyen de soupape (14) qui lui est associé.

FIG 1

EP 0 308 168 B1

FIG 2